# EUROPEAN PATENT APPLICATION

(11) **EP 0 788 205 A2**
(43) Date of publication of application: **06.08.1997**
(21) Application number: 97410014.1
(22) Date of filing: 30.01.1997
(51) Int. Cl.: H02B 1/20

(54) **Improvements in and relating to electrical distribution equipment**

(30) Priority: 31.01.1996 GB 9601931; 07.06.1996 GB 9611975
(71) Applicant: SCHNEIDER ELECTRIC SA, 92100 Boulogne Billancourt (FR)
(72) Inventor: Ball, Keith Wray, Swindon, Wiltshire-SN2 2QU (GB); Baker, Andrew Purdie, Swindon, Wiltshire-SN2 2QU (GB); Cash, Michael Chistopher, Swindon, Wiltshire-SN2 2QU (GB)
(74) Representative: Ritzenthaler, Jacques

(57) **Abstract**

An assembly for use in a wall mountable electrical consumer unit or loadcentre including mounting means (11) for locating a plurality of longitudinally extending planar outgoer bus bars (14) in superposed coplanar configuration. With this arrangement a circuit breaker (16) can be connected, via an interface cassette (15), to at least any preselected one of said bus bars (14) at any one of a plurality of outgoer positions spaced along the length of said bus bars (14). The interface cassette (15) is also separately defined.

## Description

The invention relates to electrical distribution equipment and more particularly to electrical comsumer units or loadcentres and parts therefor.

United Kingdom patent specification no. 2,264,399 shows a typical loadcentre wall mountable enclosure with an arrangement of a three phase bus bar system in which three live outgoer bus bars, one for each phase, are located juxtaposed in a single plane with a separate terminal block being provided for the connection of multiple neutrals. Although in some instances it would be useful to have a further, neutral bus bar adjacent the live bus bars, this is not practical with such an arrangement. Typical consumer units have the same shortcoming.

It is an object of the invention to obviate or mitigate the above problem.

According to one aspect of the invention there is provided an assembly for use in a wall mountable electrical consumer unit or loadcentre including mounting means for locating a plurality of longitudinally extending planar outgoer bus bars in superposed coplanar configuration whereby a circuit breaker can be connected, via an interface cassette, to at least any preselected one of said bus bars at any one of a plurality of outgoer positions spaced along the length of said bus bars.

In one embodiment of the invention the mounting means may be formed to provide for locating four said outgoer bus bars, which comprise three live bus bars and one neutral bus bar, in use.

The mounting means may be moulded of synthetic plastics material and is formed to mount an incoming connector for each bus bar at one end thereof and to mount an interface cassette at each outgoer position along opposed sides thereof.

The mounting means may be formed with downwardly depending lugs for attachment through apertures in a support surface.

There may be provided a plurality of juxtaposed mounting means with said bus bars extending therethrough.

In an alternative embodiment of the invention the mounting means may be formed for locating two said outgoer bus bars, which comprise one live bus bar and one neutral bus bar, in use.

The mounting means may comprise two opposed longitudinally extending support members moulded of synthetic plastics material formed with inwardly facing slots for mounting said outgoer bus bars.

One of the support members may be formed with outwardly extending location ribs or fins for location with slotted cover members of circuit breakers to be located therewith, in use, and may be formed-with an inwardly extending upper cover member having location slots formed therein for receiving locking projections of respective cover members of circiut breakers to be located therewith, in use.

The other of the support members may be formed with an outwardly extending support rib formed with transverse slots for locating a bus bar connector to a separate terminal strip located on the support rib.

A separate cover member may be located at each end of said support members, spanning therebetween. The assembly may be located on a base plate with Din Rail fitting and edge support.

According to a further aspect of the invention there is provided an interface cassette for use with an assembly as defined in any of the next preceding twelve paragraphs which is formed with lugs projecting from one edge thereof for attachment to said mounting means and housing connection means with at least one connector portion projecting from the opposed edge thereof for connecting to a circuit breaker.

The interface cassette may include switch means to enable disconnection from a bus bar prior to connection or disconnection of a circuit breaker.

The interface cassette may comprise a two-part housing locating a vertically extending member of electrically insulating material formed to receive an electrically conducting link member in any one of a plurality of vertically spaced locations so as to span and interconnect a selected one of said bus bars and said connection means, the vertically extending member being resiliently urged to normally provide said interconnection and a manually operable sliding cam being provided for selectively controlling electrical disconnection and interconnection.

Alternatively the interface cassette may be such that said connector portion is formed integrally with a link portion spanning the cassette and a further connector portion projecting from said one edge to connect with one of said bus bars.

Such interface cassette may also be such that said further connection portion comprises a pronged portion for locating on both sides of one of said bus bars.

Said connection means may include conductive members for contacting two of said bus bars projecting from said one edge thereof.

The foregoing and further features of the invention may be more readily understood from the following description of two preferred embodiments thereof, by way of example, with reference to the accompanying drawings, in which:-
Fig. 1 is an end elevational view, part in section, of a loadcentre with interface cassettes and miniature circuit breakers located thereon;
Fig. 2 is an exploded perspective view of the loadcentre mounting means and interface cassettes of Fig . 1 on enlarged scale;
Fig. 3 is an exploded perspective view of part of an interface cassette of Fig. 2;
Fig. 4 is a side elevational view of the part of the interface of Fig. 3 on reduced scale;
Figs. 5A and 5B are side elevational views of interface cassette halves;
Figs 6A and 6B are side and end elevational views, respectively of the mounting means of Fig. 1;
Fig. 7 is a perspective view of an alternative connection means for an alternative interface cassette;
Fig. 8 is a side elevational view of the connection means of Fig. 7;
Fig. 9 is an exploded perspective view of a consumer unit with circuit breakers located and locatable thereon;
Fig. 10 is an exploded perspective view of the mounting assembly and circuit breakers of Fig. 9, and
Fig. 11 is a schematic side view of the. mounting assembly and circuit breaker of Fig. 10.

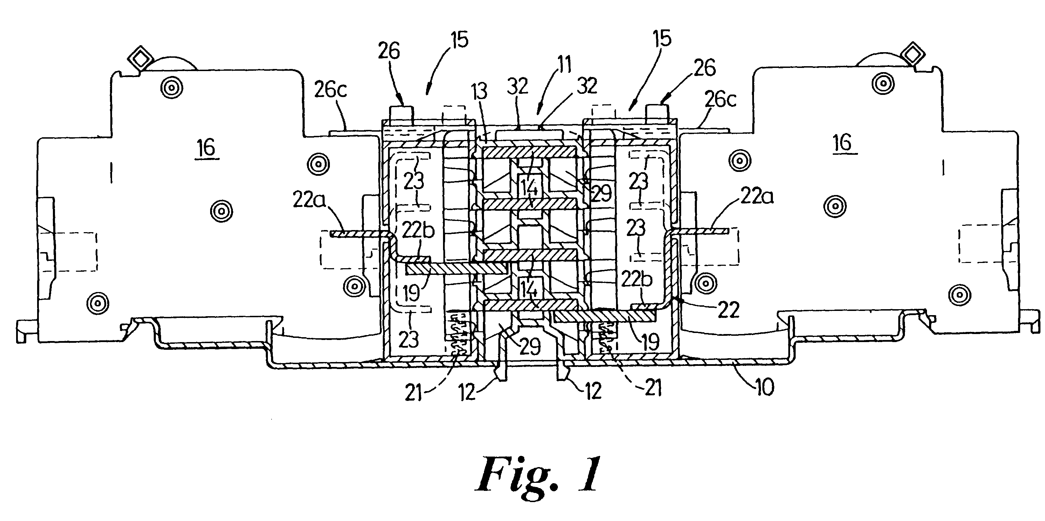

Referring now, firstly, to Fig. 1 of the drawings there is shown an electrical loadcentre comprising a support surface 10 having mounting means 11 located thereon by lugs 12 located through apertures in support surface 10. Mounting means 11 comprises a housing 13 moulded of synthetic plastics material and formed to locate four outgoer bus bars 14 in coplanar, superposed relationships the lower three comprising the red, yellow and blue live phases and the upper bus bar 14 comprising a neutral.

Interface cassettes 15 are located one on each side of housing 13 to provide electrical connection from bus bars 14 to respective miniature circuit breakers (mcb's) 16.

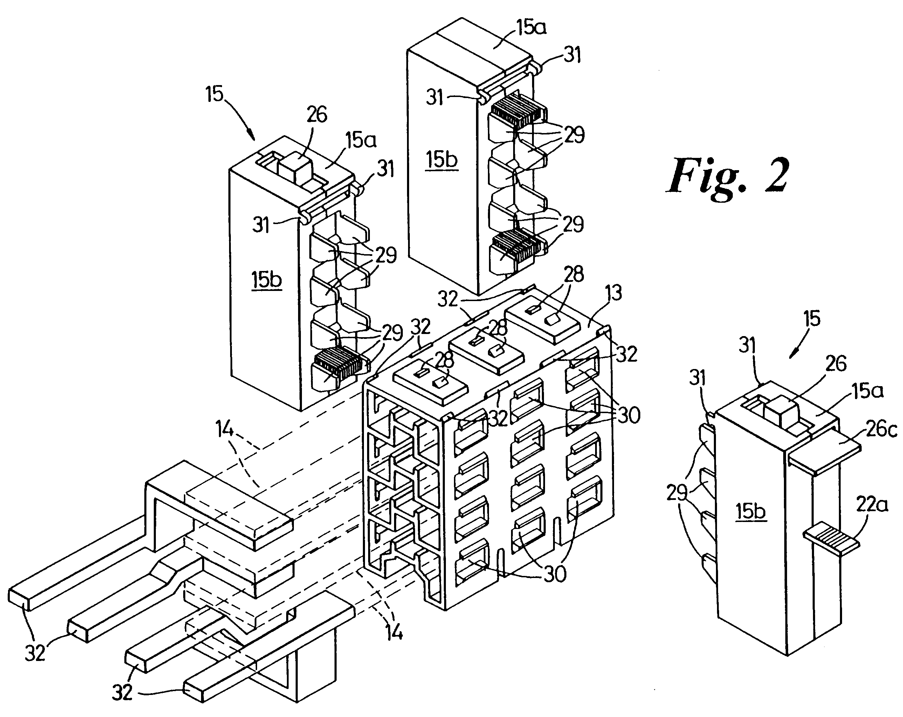

Referring now, also to Figs. 2 to 6 of the drawings each cassette 15 is formed from two interfitting housing parts 15a and 15b which are moulded of synthetic plastics material. A vertically extending member 17, moulded of synthetic plastics material, is formed with four apertures 18 for selectively receiving and carrying an electrically conductive link member 19. The member 17 is slidably mounted within grooves 20 formed in housing parts 15a and 15b and is resiliently urged in an upward direction under the action of coiled springs 21.

A connector member 22 is located in one pair of grooves 23 in housing parts 15a and 15b, depending upon which bus bar 14 is to be connected to its respective mcb 16, and has a portion 22a which protrudes through slots 24 in edges on one side of housing members 15a and 15b to engage within the connector of its respective mcb 16. The connector member 22 has a further portion 22b which protrudes through one pair of slots 25 in edges on the other side of housing members 15a and 15b so as to have its lower surface lying in the same plane as the lower surface of the bus bar 14 with which it is to be electrically connected. The member 17 being resiliently urged upwardly ensures that link member 19 normally is in engagement with the lower surfaces of portion 22b of connector member 22 and the respective bus bar 14 to which it is to be electrically connected.

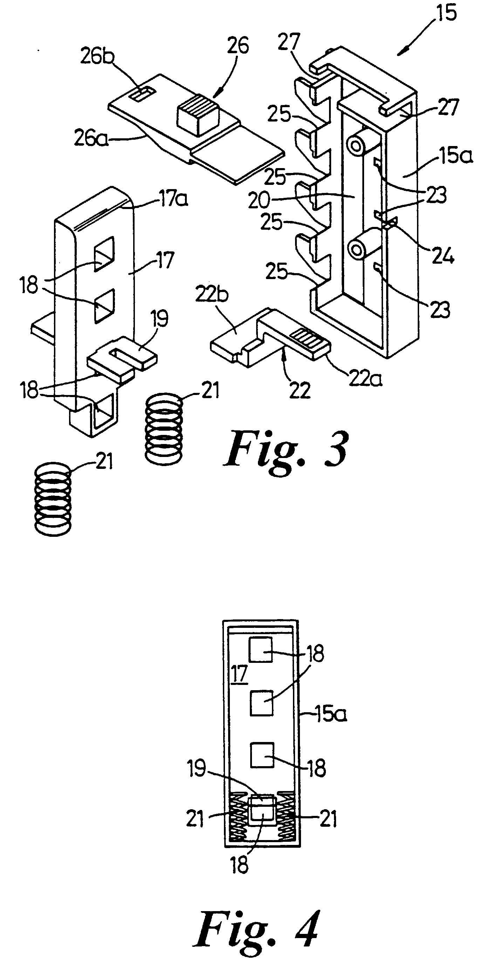

A manually operable switch member 26 is slidably mounted between slots 27 at the upper end of housing members 15a and 15b and is formed with an angled camming surface 26a which engages with an arcuate camming surface 17a at the top edge of member 17 such that when switch member 26 is moved to the left as shown in Fig. 3, camming surface 26a in engagement with camming surface 17a causes member 19 to move downwardly to break the connection of link member 19 with contact portion 22a and the respective bus bar 14. The switch member 26 is formed with an aperture 26b to engage with a protrusion 28 formed on housing 13 of mounting member 11 to lock switch member 26 in its open position.

Each of the housing members 15a and 15b are formed with protrusions 29 to protect the protruding portion of link member 19 and for accurate location with apertures 30 in housing 13. When interface cassette 15 is located to housing 13 barbed lugs 31 formed on housing members 15a and 15b engage with protrusions 32 formed on housing 13 to lock cassette 15 in position.

Incoming power connections to bus bars 14 are provided by connector members 32 which locate beneath bus bars 14 in housing member 13 at one end thereof.

When it is required to connect an mcb 16 to one of the bus bars 14, an interface cassette 15 is selected, having the correct connector member 22 for the required bus bar 14, is plugged on to housing 13 and switch 26 is moved and locked in the open position. The mcb 16 is then located on support surface 10 with connector portion 22a located therein. The switch 26 is then slid to the closed position and a surface 26c locates above mcb 16 holding it in position, such movement of switch 26 allowing closure of the electrical circuit by link member 19 under control of springs 21 urging member 17 upwardly.

Conversely when it is required to remove the mcb 16 from the assembly the switch 26 is moved to the open position and the mcb 16 removed.

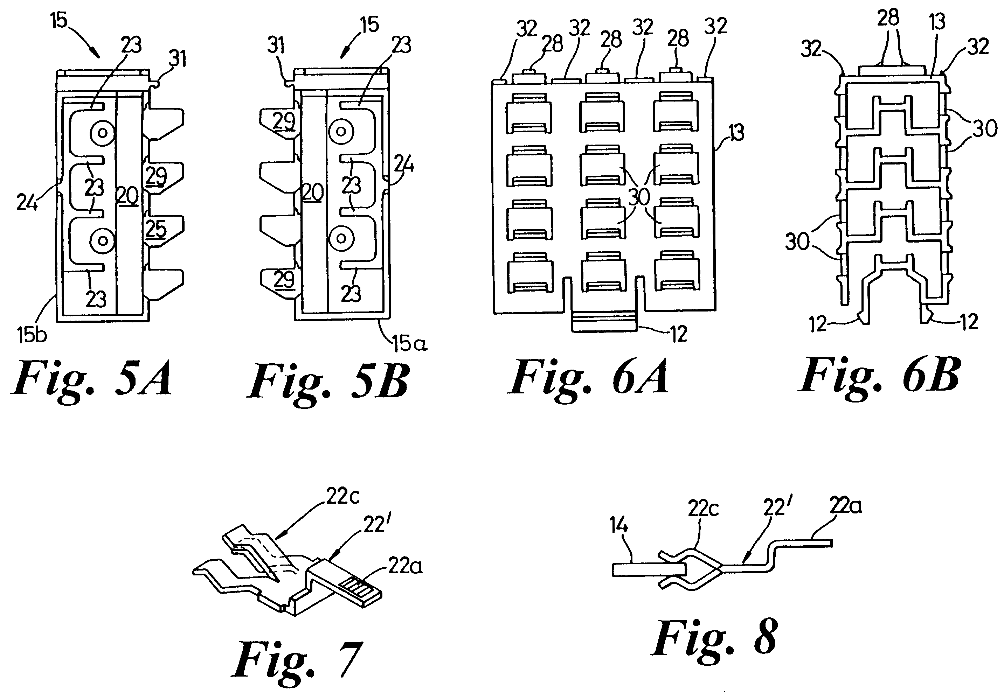

Figs. 7 and 8 show an alternative arrangement for providing a non-switched simplified interface cassette 15 (not shown) in which the link member 19 is not provided but connector member 22 extended and being provided with pronged or jaw portions 22c to engage directly above and beneath a bus bar 14. With such an arrangement the housing 13 would be modified to locate bus bars 14 to have free space both above and below the upper and lower surfaces thereof.

A further modified cassette 15a is shown in Fig. 2 having two connector members 22 for engaging both a live and neutral bus bar 14, although up to four connector members could be provided. Such an arrangement would be utilised to connect to either a residual current circuit contained within the cassette 15a, or to provide connection to a separately connected device such as a residual current circuit breaker with overload or a ground fault detector.

Although Fig. 1 shows cassettes 15 located on both sides of housing 13 such cassettes 15 could be mounted on one side only of such housing 13.

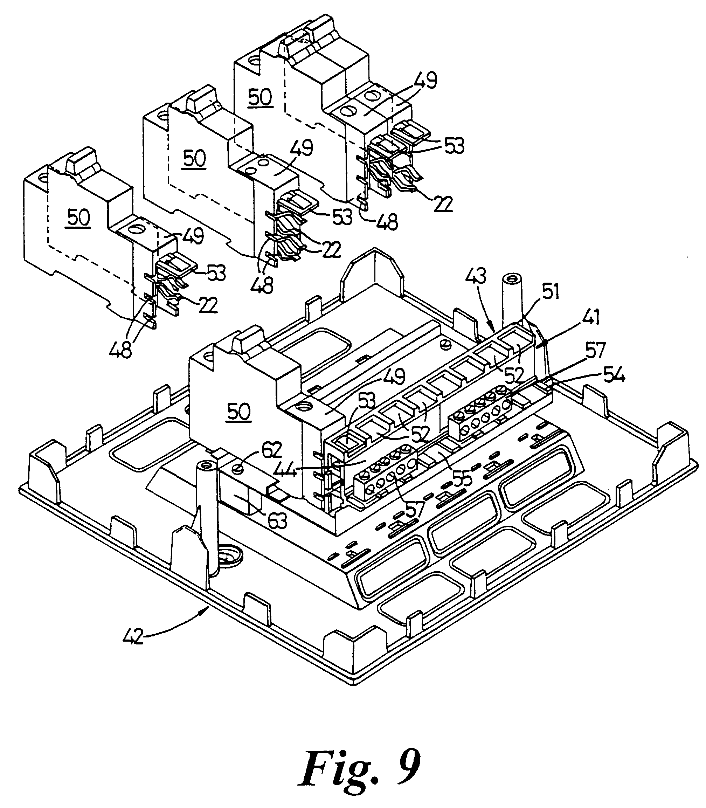

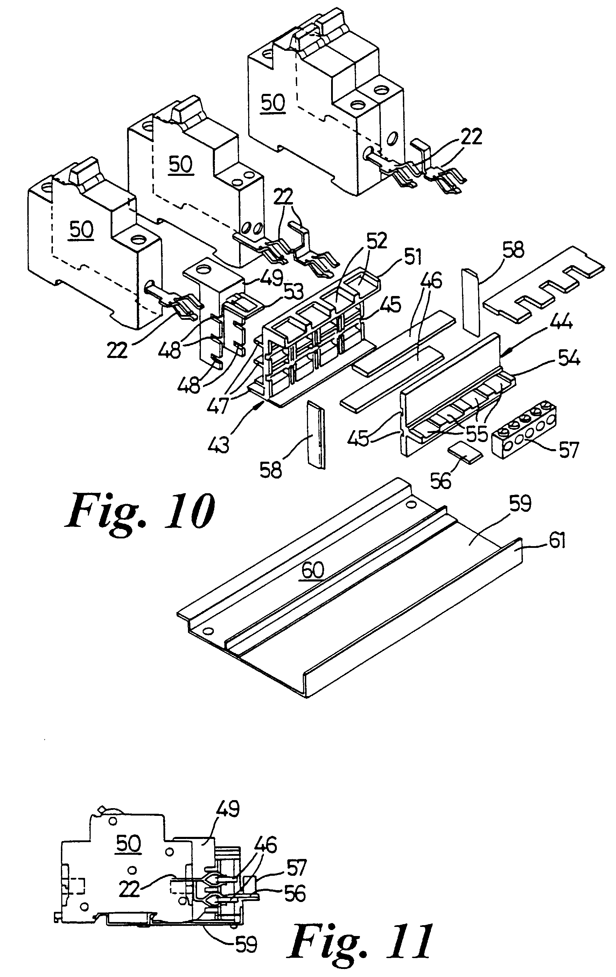

Referring now to Figs. 9, 10 and 11 there is shown a second embodiment of the invention comprising a mounting means 41 located on a consumer unit moulded base member 42 (Fig. 9). The moulded base member (42) is fully described in our copending United Kingdom Patent application No. 9518393.5 which is incorporated herein by reference.

The mounting means 41 comprises two opposed longitudinally extending support members 43 and 44, moulded of synthetic plastics material and formed with inwardly facing slots 45 for mounting bus bars 46.

Support member 43 is formed with outwardly extending location ribs or fins 47 for location with slots 48 of cover members 49 of circuit breakers 50 located therewith. Support member 43 is also formed with an inwardly extending upper cover member 51 formed with location slots 52 for receiving locking projections 53 of the respective cover members 49. Support member 44 is formed with an outwardly extending support rib 54 formed with transverse slots 55 for locating a connector 56 for connecting lower, neutral bus bar 46 to a separate terminal strip 57 located on support rib 54. A separate cover member 58 is located at each end of support members 43 and 44 to span therebetween.

The circuit breakers 50 are electrically connected to bus bars 46 by jaw or prong type connectors 22 described in detail hereinbefore with reference to Figs. 7 and 8 with covers 49 located thereover. Incoming power connections to the bus bars 46 are provided by one or more of the modules 50 as detailed below.

The whole assembly is mounted on a base plate 59 with a Din Rail fitting 60 and an edge support 61. The base plate 59 is attached by screws 62 and pedestal members 63 to the moulded base members 42 (Fig 9).

The circuit breakers 50, which can also comprise a switch unit can be provided as: a single module, single connection; a single module, double connection (live and neutral) or a double module with live connection on one module and neutral connection on the other module.

## Claims

1. An assembly for use in a wall mountable electrical consumer unit or loadcentre including mounting means for locating a plurality of longitudinally extending planar outgoer bus bars in superposed coplanar configuration whereby a circuit breaker can be connected, via an interface cassette, to at least any preselected one of said bus bars at any one of a plurality of outgoer positions spaced along the length of said bus bars.

2. An assembly as claimed in claim 1 wherein said mounting means is formed to provide for locating four said outgoer bus bars, which comprise three live bus bars and one neutral bus bar, in use.

3. An assembly as claimed in claim 1 or 2 wherein said mounting means is moulded of synthetic plastics material and is formed to mount an incoming connector for each bus bar at one end thereof and to mount an interface cassette at each outgoer position along opposed sides thereof.

4. An assembly as claimed in claim 3 wherein said mounting means is formed with downwardly depending lugs for attachment through apertures in a support surface.

5. An assembly as claimed in claim 3 or 4 comprising a plurality of juxtaposed mounting means with said bus bars extending therethrough.

6. An assembly as claimed in claim 1 wherein said mounting means is formed for locating two said outgoer bus bars, which comprise one live bus bar and one neutral bus bar, in use.

7. An assembly as claimed in claim 6 which comprises two opposed longitudinally extending support members moulded of synthetic plastics material formed with inwardly facing slots for mounting said outgoer bus bars.

8. An assembly as claimed in claim 7 wherein one of said support members is formed with outwardly extending location ribs or fins for location with slotted cover members of circuit breakers to be located therewith, in use.

9. An assembly as claimed in claim 8 wherein said one of said support members is formed with an inwardly extending upper cover member having location slots formed therein for receiving locking projections of respective cover members of circuit breakers to be located therewith, in use.

10. An assembly as claimed in claim 8 or 9 wherein the other of said support members is formed with an outwardly extending support rib formed with transverse slots for locating a bus bar connector to a separate terminal strip located on said support rib.

11. An assembly as claimed in any one of claims 7 to 10 wherein a separate cover member is located at each end of said support members spanning therebetween.

12. An assembly as claimed in any one of claims 6 to 11 located an a base plate with Din Rail fitting and edge support.

13. An interface cassette for use with an assembly as claimed in any one of claims 1 to 5 formed with lugs projecting from one edge thereof for attachment to said mounting means and housing connection means with at least one connector portion projecting from the opposed edge thereof for connecting to a circuit breaker.

14. An interface cassette as claimed in claim 13 including switch means to enable disconnection from a bus bar prior to connection or disconnection of a circuit breaker.

15. An interface cassette as claimed in claim 14 comprising a two-part housing locating a vertically extending member of electrically insulating material formed to receive an electrically conducting link member in any one of a plurality of vertically spaced locations so as to span and interconnect a selected one of said bus bars- and said connection means, the vertically extending member being resiliently urged to normally provide said interconnection and a manually operable sliding cam being provided for selectively controlling electrical disconnection and interconnection.

16. An interface cassette as claimed in claim 13 wherein said connector portion is formed integrally with a link portion spanning the cassette and further connector portion projecting from said one edge to connect with one of said bus bars.

17. An interface cassette as claimed in claim 16 wherein said further connector portion comprises a pronged portion for locating on both sides of one of said bus bars.

18. An interface cassette as claimed in claim 13 wherein said connection means includes conductive members for contacting at least two of said bus bars projecting from said one edge thereof.

19. An interface cassette for use with an assembly as claimed in any one of claims 1 to 5 inclusive formed with lugs projecting from one edge thereof for attachment to said mounting means and housing connection means for contacting at least two of said bus bars projecting from said one edge thereof.

20. An interface cassette as claimed in claim 19 including a residual current circuit contained therein.

21. An electrical loadcentre and interface cassette assembly substantially as hereinbefore described with reference to Figs 1 to 8 of the accompanying drawings.

22. An electrical consumer unit and circuit breaker assembly substantially as hereinbefore described with reference to Figs 9 to 11 of the accompanying drawings.
